# EUROPEAN PATENT SPECIFICATION

(11) **EP 3 828 374 B1**
(45) Date of publication and mention of the grant of the patent: **20.08.2025**
(21) Application number: 19212239.8
(22) Date of filing: 28.11.2019
(51) Int. Cl.: E06B 9/322, H01M 10/48, H02J 7/00, E06B 9/68, E06B 9/72

(54) **ELECTRIC WINDOW COVERING**
ELEKTRISCHE FENSTERABDECKUNG
RECOUVREMENT DE FENÊTRE ÉLECTRIQUE

(43) Date of publication of application: 02.06.2021
(73) Proprietor: Nien Made Enterprise Co., Ltd., Taichung 408 (TW)
(72) Inventor: Nien, Chao-Hung, Taichung 408 (TW); Jao, Jui-Pin, Miaoli County 351 (TW); Hsu, Shih-Wei, Hsinchu County 304 (TW); Chu, Ping-Yu, Hsinchu County 310 (TW)
(74) Representative: Straus, Alexander

(56) References cited:
- CN-A- 110 005 331
- DE-U1- 202016 006 336
- US-A1- 2018 175 662

## Description

### Field of the Invention

The present invention relates generally to an electric window covering, and more particularly to a charging system for an electric window covering which actively presents a warning notice to inform the user about the power status of the power supply device only when the electric power stored in the power supply device of the electric window covering reaches a low level, whereby the objective to remind the user to charge the electric window covering could be achieved without unduly consuming the power of the power supply device, and therefore the stand-by time would not be affected.

### Background of the Invention

Generally, a window covering includes a headrail, a covering material provided below the headrail, and a control mechanism, wherein the control mechanism is mostly provided inside the headrail, and can be operated to move the covering material. When driven to operate by force, the control mechanism opens or closes the covering material, whereby to adjust the coverage of the covering material on an opening (e.g., a window or a door) of a building.

Conventional ways to control the movements of covering materials can be roughly divided into two categories: by manual and by electric means. In general, electric window coverings have a motorized tube powered by electricity, which is provided in or near the headrail. An output end of the motorized tube is an output shaft, of which the motion correlates with that of a reel. When the motorized tube starts to operate after receiving an activating signal, it drives the output shaft to rotate, and then the output shaft correlatively rotates the reel, opening or closing the covering material as a result. Typically, the motorized tube of an electric window covering would be provided close to the reel, for such arrangement has the advantage of reducing energy loss happened during the process of transmitting the rotary force from the motorized tube to the reel.

Nevertheless, since electricity is taken as a source of power for electric window coverings, if the power supply device is far from where an electric window covering is installed, a power transmission wire connecting the two would be required for transmitting electricity to the electric window covering and for powering the motorized tube. However, if the power transmission wire cannot be hidden behind walls or decorations of the room for any reason, it would appear abrupt, and spoil the overall appearance of the room. In addition, in some regions, power transmission wires cannot be installed anywhere simply by requirements, as some installation locations are forbidden by safety regulations. In such a case, the locations to install electric window coverings are thus limited, which would affect consumers' willingness to use electric window coverings.

To overcome the limitations above, power supply devices which have the ability to store power (e.g., batteries) can be used to provide electricity to electric window coverings in the circumstances not suitable for installing power transmission wires. However, such a power supply device has limited capacity, and once it runs out of power, it has to be replaced. Furthermore, in the purpose of powering the motor efficiently and reducing energy loss during power transmission, this kind of power supply devices are usually located in or near the headrail, i.e., located around the top edge of the window, which makes replacing batteries a troublesome job. In this regard, designs with external batteries have been developed to lessen the inconvenience. Take US Patent No. US6910515 as an example, the headrail disclosed therein is provided with a conductive terminal, which is exposed out of the headrail and is connected to a motor assembly provided in the headrail. Another conductive terminal is provided on a top end of a suspending rod, which contains a battery inside. The battery and the conductive terminal on the top of the suspending rod are coupled. By electrically connecting the conductive terminal on the top of the suspending rod and the conductive terminal at the headrail, the power of the battery in the suspending rod can be transmitted to the motor assembly through the connected conductive terminals, whereby to power the motor assembly. Taiwanese Patent No. TW539799 is another example, which discloses an electric window covering including not only a headrail and a movable covering material, but also a control system. The control system includes a linking device provided at the headrail, and a driving device which can be separated from the window covering. A motor and a power source are provided inside a front end of the driving device, wherein the power source powers the motor. The driving device further has a force output extending from the front end thereof, wherein the force output can be driven and rotated by the motor. The driving device has a control switch provided on a rear end thereof to be coupled to the motor. The linking device includes a force input and an actuating portion which are exposed out of the headrail, wherein the force input can be connected to the force output, whereby to connect the driving device and the linking device. On the other hand, the actuating portion is directly or indirectly connected to the movable covering material. When the motor rotates the force output, and the force input is moved by the force output to rotate as well, the actuating portion is rotated along with the rotation of the force input, whereby to open or close the movable covering material correspondingly.

In summary, the aforementioned electric window coverings both have a long rod connected to the headrail, either to power the motor assembly provided in the headrail, or to supply a rotary force to the linking device which is also provided in the headrail. To serve the above functions, the long rod at least contains a power source or a driving device. For consideration of the convenient use of this kind of electric window coverings (for example, using a remote control to control the operation of such a window covering), the long rod has to be permanently suspended under the headrail. However, with a battery to provide power or a motor to drive the driving device, the long rod would be somewhat heavy, generating a lasting downward pulling force at where the headrail and the long rod are connected. Therefore, the headrail may tilt by having the long rod suspended below for a long time. Furthermore, a window covering with a permanently suspended long rod occupies more space, leading to a higher possibility that someone may bump into the long rod, which may cause damage to the long rod or the junction between the long rod and the headrail. People may even get hurt from that. In addition, a permanent suspended long rod would also affect the appearance of the room. Furthermore, the aforementioned electric window coverings both have a connecting structure exposed out of the headrail to be connected to the motor assembly or the linking device, so as to engage the long rod with the connecting structure to transmit electric power or driving power. The exposed connecting structure would spoil the totality of the appearance of an electric window covering, impairing the aesthetic feeling provided by the overall design of the electric window covering.

In addition, some types of electric window coverings use rechargeable secondary batteries to avoid the inconvenience of replacing batteries. Such electric window coverings have a charging connector provided at the headrail, and once the secondary battery runs out of power, it can be recharged by providing electric power to the charging connector, as disclosed in Chinese Patents No. CN201367835Y, No. CN205693393U, No. CN204764900, and European patent No. EP3128115A1. However, in order to effectively provide power to the motorized assembly provided in the headrail, a power supply device is usually fixed at a location near the headrail, or even directly installed in the headrail, which is above the top of the window. Therefore, tools (e.g., ladders) are still needed for users to approach the charging connectors while trying to charge the secondary batteries. Alternatively, there can be a charging cable hanging from the headrail, wherein an end of the charging cable inside the headrail is connected to the secondary battery which is also inside the headrail, while another end of the charging cable is exposed outside and is provided with a connecting end. With such design, the connecting end can be connected to an external power source, whereby the electric power can be provided to the rechargeable battery through the charging cable to recharge the battery, as disclosed in US Patent No. US9514638.

However, charging a rechargeable battery with an exposed charging cable is still not a perfect solution, for such an exposed charging cable could be unintentionally wound into a loop, creating a potential hazard, and could also affect the overall appearance of the corresponding electric window covering. On the other hand, providing electric power to the rechargeable battery through a charging connector at the headrail would pose a limitation on the installation height as well, for it would be difficult to charge a corresponding power supply device if the charging connector is installed too high. Therefore, how to charge an electric window covering conveniently and safely has become a major issue that needs to be resolved in the related industry.

Furthermore, even if the above-mentioned issue regarding the inconvenience of replacing battery is resolved by improving the ways of charging the rechargeable battery in an electric window covering, there would pose another problem of when to recharge the rechargeable battery and how to know its current capacity. To resolve this problem, the power supply device of an electric window covering could further include a first remaining power detection circuit and a first display unit, wherein the first remaining power detection circuit detects the capacity of the first rechargeable battery inside the power supply device, and the first display unit can be fixed on the housing of the electric window covering, on a remote control, on a cellphone, or on other portable devices. Signal transmissions between the first remaining power detection circuit and the first display unit is performed either wirelessly or through physical connections. The current power status of the first rechargeable battery detected by the first remaining power detection circuit is constantly or periodically sent to the first display unit for display, so that a user could monitor the current capacity of the first rechargeable battery at any desired time, and could accordingly decide when to charge the first rechargeable battery.

However, in the condition that the first rechargeable battery does not need to be recharged, frequently or periodically displaying the current power status of the first rechargeable battery or transmitting signals regarding the power status of the first rechargeable battery to other devices to be displayed thereon would unnecessarily waste the power of the first rechargeable battery. Therefore, an issue to be improved is on how to actively send out a warning notice to remind the user to charge the first rechargeable battery only when the first rechargeable battery needs to be charged, by which the unnecessary power consumption of the first rechargeable battery could be avoided, and the run-time of the first rechargeable battery would not be shortened.

In addition, Germany patent publication no. DE202016006336U1 discloses a power supply unit (2) coupled with an alternating current of 230V, and the power supply unit (2) converts the alternating current into a direct current, which can then be provided to an accumulator (5) for charging the accumulator (5). When the accumulator (5) is not being charged (as in the situation that the alternating current stops providing power) and the energy saved in the accumulator (5) has lowered to a threshold, the system will inform the user in visual or auditory ways.

However, the power supply unit (2) and the accumulator are separated only when one of the power supply unit (2) and the accumulator (5) is damaged. The power supply unit (2) is not portable to connect to the accumulator (5) for charging operation and is not feasible to be portably taken away from the accumulator (5) for suspending the charging operation.

### Summary of the Invention

This in mind, the present invention aims at providing an electric window covering.

This is achieved by an electric window covering according to claim 1. The dependent claims pertain to corresponding further developments and improvements.

One objective of the present invention is to provide an electric window covering, which uses a first remaining power detection circuit to detect the potential magnitude of a rechargeable power unit composed by a first rechargeable battery. Said potential magnitude can be compared with a threshold predetermined in the comparison module. If the potential magnitude is less than the threshold, the comparison module generates and outputs a warning notice signal, which is then transmitted to a presenting module to be presented as a warning notice. In other words, the warning notice signal, which informs the user that the rechargeable power unit needs to be charged, is only actively sent out to the presenting module when the potential magnitude of the rechargeable power unit reaches a lower boundary. Therefore, in the situation that the rechargeable power unit still has sufficient power, the power unnecessarily consumed to display the current power status could be avoided. In this way, power could be saved, and the run-time of the rechargeable power unit for providing power to the electric window covering could be extended.

To achieve the above-mentioned objective, the present invention provides an electric window covering, wherein the electric window covering comprises a motorized assembly, which controls a movement of the electric window covering, and a power supply device, which comprises a rechargeable power unit and a first remaining power detection circuit, wherein the rechargeable power unit is coupled to and provides power to the motorized assembly, and the first remaining power detection circuit is coupled to the rechargeable power unit to detect a potential magnitude of the rechargeable power unit. The first remaining power detection circuit generates and outputs a potential signal. The charging system includes a portable charging device, a comparison module, and a notification unit, wherein the portable charging device provides power to the rechargeable power unit of the power supply device, and the comparison module is coupled to the first remaining power detection circuit of the power supply device. The potential signal outputted by the first remaining power detection circuit is inputted into the comparison module to be compared. When the potential magnitude represented by the potential signal is less than a threshold predetermined in the comparison module, the comparison module generates and outputs a warning notice signal. The notification unit includes a presenting module, which receives the warning notice signal outputted by the comparison module and represents a warning notice representing the warning notice signal. Besides, the electric window covering further includes a portable charging device, a first fixing structure, a frame, a second fixing structure and an electric power input. The portable charging device is configured to be detachably coupled to and provide power to the rechargeable power unit. The portable charging device includes an electric power output. The first fixing structure is disposed at the portable charging device. The second fixing structure disposed at the frame. The electric power input is disposed at the frame and coupled to the rechargeable power unit. When the first fixing structure and the second fixing structure are connected, the electric power output provides the power to the rechargeable power unit through the electric power input. When the first fixing structure and the second fixing structure are separated, the electric power output stops providing the power to the rechargeable power unit.

### Brief Description of the Drawings

The present invention will be best understood by referring to the following detailed description of some illustrative embodiments in conjunction with the accompanying drawings, in which:
FIG. 1 is a block diagram showing a system that the charging system of the present invention provides power to an electric window covering;
FIG. 2 is a block diagram showing an implementation of the power supply device, by which a remaining power detection function is provided;
FIG. 3 is a perspective view of the charging device of the present invention;
FIG. 4 is a block diagram showing the implementation of the power storage device of the present invention for remaining power detection;
FIG. 5 is a block diagram showing another implementation of the first display unit of the present invention;
FIG. 6 is a block diagram showing yet another implementation of the first display unit of the present invention;
FIG. 7 is a perspective view of an electric window covering applied with the charging system of a first embodiment of the present invention;
FIG. 8 is a schematic view showing the frame applied with the first embodiment of the present invention;
FIG. 9 is a schematic view showing the inside of the frame illustrated in FIG. 18;
FIG. 10 is a perspective view of the charging system of the first embodiment of the present invention;
FIG. 11 is an enlarged perspective view of the engaging portion shown in FIG. 10;
FIG. 12 is a schematic view of the extension object of the charging device in the first embodiment of the present invention;
FIG. 13 is a schematic view of the power storage device of the charging device in the first embodiment of the present invention;
FIG. 14 is a schematic view showing the use situation of the first embodiment of the present invention;
FIG. 15 is a side sectional schematic view of FIG. 24;
FIG. 16 is a block diagram showing the system provided in the present invention which notifies a user regarding a low potential magnitude of the power unit;
FIG. 17 is a system block diagram showing the arrangement of the notification unit of the present invention when it is provided in the housing;
FIG. 18 is a system block diagram showing the arrangement of the notification unit of the present invention when it is provided in a framework independent of the housing;
FIG. 19 is a system block diagram showing an arrangement of the notification unit of the present invention when it is provided at the charging device;
FIG. 20 is a system block diagram showing another arrangement of the notification unit of the present invention when it is provided at the charging device;
FIG. 21 is a system block diagram showing an arrangement of the notification unit of the present invention when it is provided at a portable device of a user; and
FIG. 22 is a schematic view showing how the first wireless transceiver module and the second wireless transceiver module of the present invention perfume wireless communications through a gateway, a router, and a cloud server.

### Detailed Description

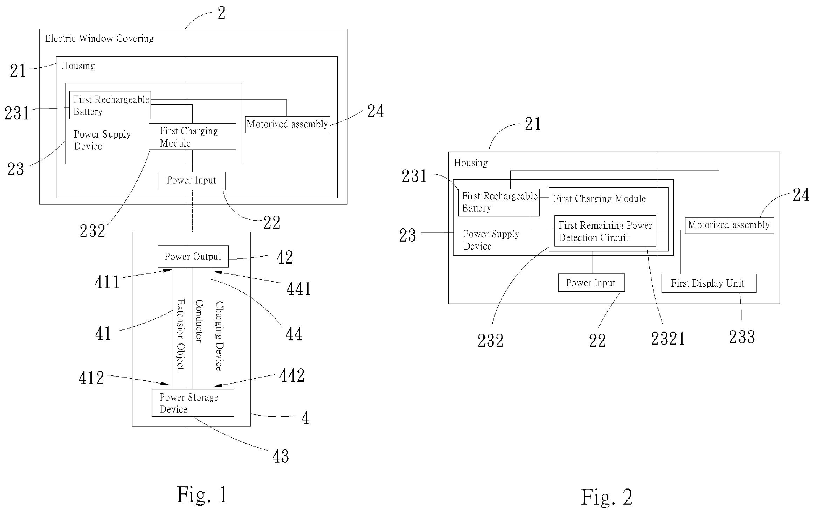

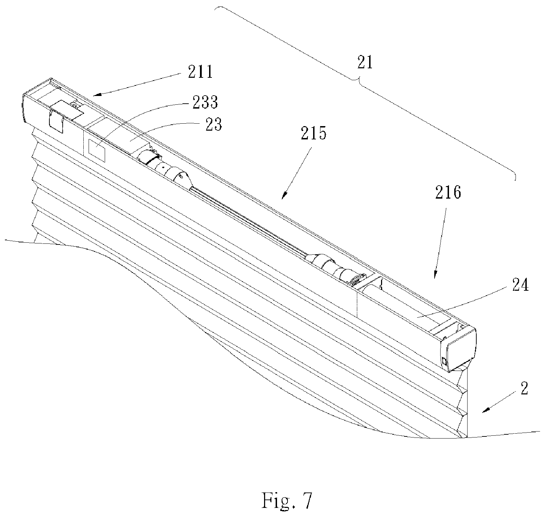

As described above, FIG. 1 is a block diagram showing a system that a charging system of the present invention provides power to an electric window covering, and FIG. 7 is a perspective view of an electric window covering 2 applied with a charging system of a first embodiment of the present invention. Said electric window covering 2 includes a housing 21, an electric power input 22, a rechargeable power supply device 23, and a motorized assembly 24, wherein the electric power input 22 is provided in a frame 211, the power supply device 23 is provided in a first seat 215, and the motorized assembly 24 is provided in a second seat 216. To be specific, the first seat 215 is used to accommodate the power supply device 23, and the second seat 216 is used to accommodate the motorized assembly 24. The power supply device 23 includes a first rechargeable battery 231 and a first charging module 232, wherein the first rechargeable battery 231 is coupled to the motorized assembly 24, whereby to provide electric power to the motorized assembly 24, so that the motorized assembly 24 could drive a covering material of the electric window covering 2 to open or close. The first charging module 232 is respectively coupled to the electric power input 22 and the first rechargeable battery 231, and is capable of controlling a charging procedure of the first rechargeable battery 231. It has to be noted that, the aforementioned coupling relationships between the components are not limitations in implementing the power supply device 23. The first rechargeable battery 231 could also provide power to the motorized assembly 24 through, as required, other circuit modules.

In the aforementioned structure, the frame 211, the first seat 215, and the second seat 216 could be independent components which respectively fix or accommodate the electric power input 22, the power supply device 23, and the motorized assembly 24. Alternatively, the frame 211, the first seat 215, and the second seat 216 could also be, in consideration of the purpose of modularization or easy assembling, integrally made as one single housing 21. In such a case, the electric power input 22, the power supply device 23, and the motorized assembly 24 or other mechanical components which are adapted to drive the electric window covering 2 are all provided in the housing 21, forming a modular component which is convenient for assembling. The housing 21 described throughout the whole specification is modularized as an example for explaining the concept of the present invention, and the housing 21 at least includes the frame 211, so that the electric power input 22 can be directly or indirectly provided therein to be properly positioned.

The charging system applied to the electric window covering 2 includes a charging device 4, which at least includes an extension object 41 having a stiffness, an electric power output 42, and a power storage device 43. By saying that the extension object has the stiffness, what we mean here is that, when the extension object 41 is held by a bottom end thereof and erected, the extension object 41 could keep in a rigid and upright state. The extension object 41 has a first connecting portion 411 and a second connecting portion 412 which are provided in a longitudinal direction thereof. In the current embodiment, the charging device 4 further includes a conductor 44, which is provided in the longitudinal direction of the extension object 41, and is adapted to be fixed thereon. The conductor 44 has a first end 441 and a second end 442, wherein the first end 441 is provided at a location corresponding to the first connecting portion 411 of the extension object 41, and is coupled to the electric power output 42; the second end 442 is provided at a location corresponding to the second connecting portion 412, and is coupled to the power storage device 43. The conductor 44 fixed on the extension object 41 has an inherent conductivity, and therefore could transmit electric power between the electric power output 42 and the power storage device 43. Whereby, the power stored in the power storage device 43 could be transmitted to the electric power output 42.

When the charging device 4 is connected to the frame 211, the first connecting portion 411 of the extension object 41 is close to the frame 211. At this time, the electric power stored in the power storage device 43 could be transmitted through the conductor 44 provided in the extension object 41, passing through the conductor 44 from the second end 442 thereof to the first end 441 thereof. In other words, the electric power could be transmitted from the location corresponding to the second connecting portion 412 of the extension object 41 to the location corresponding to the first connecting portion 411, and then transmitted to the electric power output 42, whereby to provide the electric power to the electric power input 22 provided in the frame 211, so that the first rechargeable battery 231 could be charged through the first charging module 232. Furthermore, while the charging process is going on, the charging device 4 could be kept connected to the frame 211 and suspended therefrom through a fixing means, and therefore it would be not necessary to hold the charging device 4 by hand the whole time.

With the aforementioned design, when it is needed to charge the power supply device 23 of the electric window covering 2, a user would only need to utilize the stiffness of the extension object 41 by holding the bottom end of the charging device 4 and directly moving the charging device 4 toward the housing 21. Once the charging device 4 is kept connected to the frame 211 and is suspended therefrom, the electric power could be transmitted from the power storage device 43 to the electric power output 42 through the extension object 41 or the conductor 44 fixed to the extension object 41. After that, the electric power could be provided to the electric power input 22 which is provided in the frame 211, and then transmitted to and recharge the first rechargeable battery 231 of the power supply device 23. In this way, a user could get rid of the annoyance of using a ladder or other ways to approach the power supply device 23 simply because the batteries need to be replaced or recharged. When charging is completed, the charging device 4 could be disengaged from the frame 211, and then the fully charged power supply device 23 could start to provide power to the motorized assembly 24 or other electronic control components. No external electric power or driving power would be needed.

The aforementioned first rechargeable battery 231 of the power supply device 23 can be a nickel-metal hydride rechargeable battery, a nickel-zinc rechargeable battery, or a lithium-ion rechargeable battery. However, this is not a limitation for the selection of the first rechargeable battery 231; any rechargeable secondary batteries can be an option for carrying out the above design. In practice, the first rechargeable battery 231 can be integrally bond with the first charging module 232, so that these two components can be efficiently installed in the first seat 215 (or the integrally made housing 21) as a whole. In yet another embodiment, the first rechargeable battery 231 can solely serve as a power unit 231a or make up a power unit 231a with other first rechargeable batteries in an integrated manner. Further in another embodiment, the power unit 231a and the first charging module 232 can be integrated into a single component.

Please refer to FIG. 2 and FIG. 7, wherein FIG. 2 is a block diagram showing an implementation of the power supply device described in the specification, by which a remaining power detection function could be provided. As shown in FIG. 2, the first charging module 232 of the power supply device 23 at least includes a first remaining power detection circuit 2321. To better control the charging procedure of the first rechargeable battery 231, the first charging module 232 could further include a first discharging control circuit, a first charging control circuit, a first protection control circuit, and a first switching circuit, wherein the conditions which are preventable by the first protection control circuit include, but not limited to, overcharge, overvoltage, over discharge, overload, overheat, and short circuit. The first switching circuit is not shown in the drawings, for it is a well-known technique related to charging modules, and therefore we are not going to describe it in details herein.

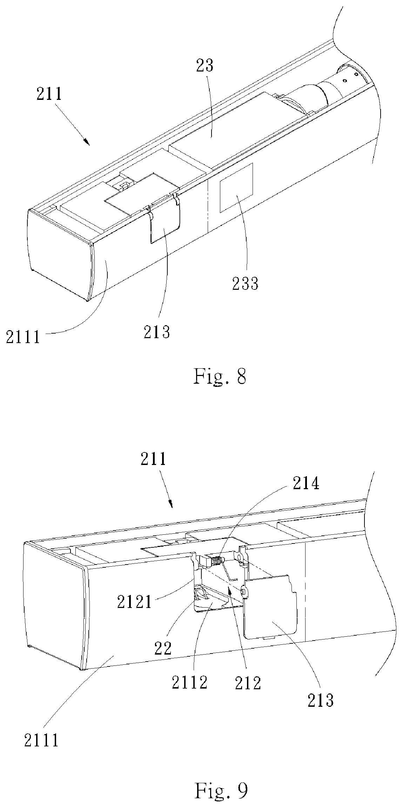

In the designs mentioned in the specification, the electric power input 22, which is provided in the frame 211, roughly includes at least one of the following parts which could be used for electrical coupling: a pin, a pin socket, a connector, a USB connector, a plug, a socket, and an electrical coupling point. In the aforementioned designs, the frame 211 further has a first terminal block 2112, and the electric power input 22 is fixed at the first terminal block 2112 (as shown in FIG. 9).

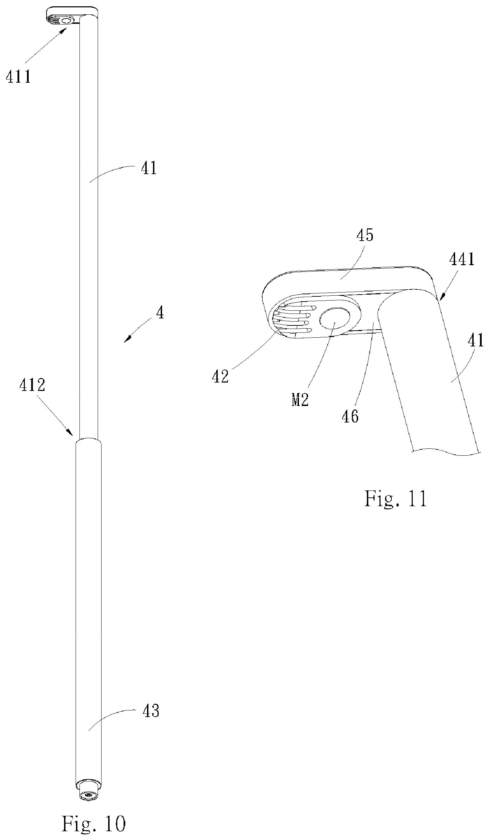

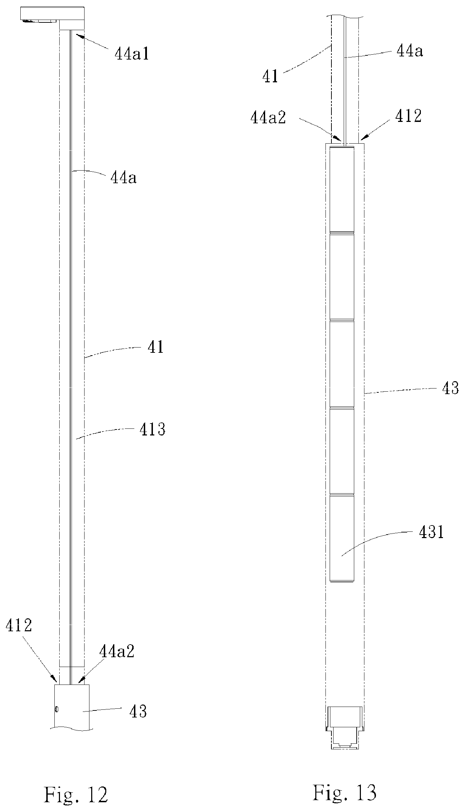

Based on the components of the aforementioned charging system, the extension object 41 of the charging device 4 of the present invention can be a long object which has the stiffness, or a long object which not only has the stiffness but also is extensible. In other words, the extension object 41 should be able to be erected in a longitudinal direction of the long object, having the first connecting portion 411 and the second connecting portion 412 provided in the longitudinal direction of the extension object 41, as shown in FIG. 10. In an embodiment, the extension object 41 is a long object which has the stiffness and a fixed length, e.g., a long pole; in another embodiment, the extension object 41 has a communicated space 413 provided in the longitudinal direction thereof, such as a hollow tube shown in FIG. 12.

Please refer to FIG. 1 again, in the embodiments of the present invention, the charging device 4 further includes the conductor 44, which goes through, provided in, or fixed on the extension object 41 in the longitudinal direction thereof. The conductor 44 has the first end 441 and the second end 442, wherein the first end 441 of the conductor 44 is provided at the location corresponding to the first connecting portion 411 of the extension object 41, while the second end 442 of the conductor 44 is located at the location corresponding to the second connecting portion 412 of the extension object 41. When electric power is transmitted from the second end 442 to the first end 441 along the conductor 44, it is transmitted from the location corresponding to the second connecting portion 412 to the location corresponding to the first connecting portion 411 in the longitudinal direction of the extension object 41. In an embodiment, the conductor 44 can be a wire 44a wrapped in an insulating layer, wherein the wire 44a can be fixedly attached to an outer surface of the extension object 41, or provided in the communicated space 413 inside the extension object 41 (as shown in FIG. 12) in the longitudinal direction of the extension object 41.

In the current embodiment of the present invention, the power storage device 43 is detachably coupled to the second end 442 of the conductor 44 which is located at the position corresponding to the second connecting portion 412 of the extension object 41. The power storage device 43 is a portable power source which can store electric power, or a storage battery capable of storing electric power. In an embodiment, the power storage device 43 is coupled to the second end 442 of the conductor 44 through a wire 44a which is used as a medium, so that the power in the power storage device 43 could be transmitted to the second end 44a2 of the wire 44a (as shown in FIG. 12 and FIG. 13). In the current embodiment, the power storage device 43 is accommodated in the extension object 41 at a position near the second connecting portion 412.

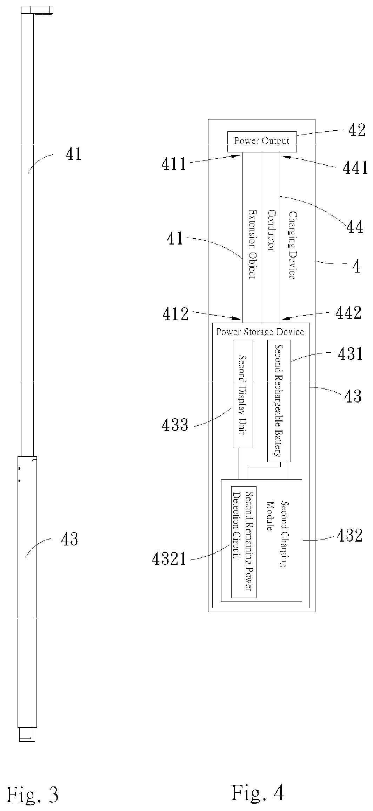

As shown in FIG. 4, in an embodiment, the power storage device 43 at least includes a second rechargeable battery 431, second charging module 432, or further includes a second discharging control circuit, a second charging control circuit, a second protection control circuit, and a second switching circuit, wherein the conditions which are preventable by the second protection control circuit include, but not limited to, overcharge, overvoltage, over discharge, overload, overheat, and short circuit. The second switching circuit is not shown in the drawings, for it is a well-known technique related to charging modules, and therefore we are not going to describe it in details herein. With such design, when the power storage device 43 is coupled to mains electricity, the mains electricity could be used to charge the power storage device 43, and to control the charging procedure.

As shown in FIG. 1, in the current embodiment, the electric power output 42 is coupled to the first end 441 of the conductor 44 located at the position corresponding to the first connecting portion 411. In an embodiment, the electric power output 42 includes at least one of the following components: a pin, a pin socket, a connector, a plug, a socket, and a conductive pad, etc., wherein said at least one components included in the electric power output 42 matches the electric power input 22 provided in the frame 211, and is located at a corresponding position. When the electric power input 22 and the electric power output 42 are connected by engaging the matching and corresponding components, such as inserting the pin into the pin socket, correspondingly engaging the connectors, plugging the plug into the socket, or contacting the conductive pads, the electric power of the electric power output 42 could be transmitted to the electric power input 22, and then to the first charging module 232 coupled to the electric power input 22, whereby to charge the first rechargeable battery 231 of the power supply device 23. In the aforementioned embodiment, the charging device could further include a second terminal block 46, which could be fixed at the extension object 41, or integrally extended from the extension object 41, wherein the electric power output 42 is fixedly provided at the second terminal block 46 (as shown in FIG. 11).

In the embodiments of the present invention, the charging system could further include a first fixing structure and a second fixing structure, wherein the first fixing structure is connected to the extension object 41 of the charging device 4 and is near the first connecting portion 411, and the second fixing structure is fixed to the frame 211, corresponding to the first fixing structure. The first fixing structure and the second fixing structure are optionally combinable, and when the first and the second fixing structures are combined, the charging device 4 could be firmly connected to the frame and hang therefrom, providing electric power to the electric power input 22 from the electric power output 42, whereby to charge the first rechargeable battery 231 of the power supply device 23. By combining the first fixing structure and the second fixing structure, the charging device 4 could hang from the frame 211, and would not need to be held by hand or by any kind of supporters during the charging procedure. When the charging is completed, the first fixing structure and the second fixing structure could be easily separated, so as to separate the charging device 4 from the frame 211. At this time, the electric power output 42 stops providing power to the electric power input 22, and the charging operation is completed.

In an embodiment, the first fixing structure includes an engaging portion 45, wherein the engaging portion 45 is connected to the first connecting portion 411 of the extension object 41, and is substantially perpendicular to the longitudinal direction of the extension object 41, so that the extension object 41 and the engaging portion 45 substantially form a reversed "L" shape. The electric power output 42 is fixed at the engaging portion 45 (as shown in FIG. 11). The electric power input 22 is fixedly provided on the frame 211, wherein the frame 211 further has an outer plate 2111. The second fixing structure includes a notch 212, wherein the notch 212 is provided on the frame 211, and is recessed into the frame 211. Furthermore, the notch 212 has an opening 2121 formed on the outer plate 2111. The positions of the notch 212 and the electric power input 22 correspond to each other, as shown in FIG. 9. To start the charging operation, a user could hold an end of the extension object 41 to move the extension object 41 toward the frame 211, and eventually, fit the engaging portion 45 into the notch 212 through the opening 2121. In this way, the extension object 41 does not need to be held manually during the charging procedure, and the extension object 41 could remain connected to the frame 211, so that the charging device 4 would hang from the frame 211. At the same time, the electric power output 42 would contact the electric power input 22, so that the electric power output 42 could transmit electric power to the electric power input 22 to perform the charging operation. To finish the charging operation, a user could move the extension object 41 to make the engaging portion 45 move out of the opening 2121 and get disengaged from the notch 212. As a result, the extension object 41 would be separated from the frame 211, interrupting the contact between the electric power output 42 and the electric power input 22, whereby to stop providing electric power to the electric power input 22.

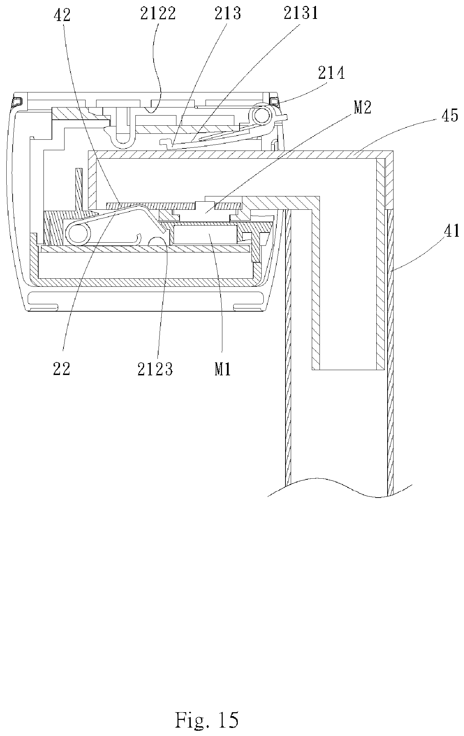

As shown in FIG. 11 and FIG. 15, in another embodiment, the engaging portion 45 could be provided with a second magnetic member M2, and the notch 212 could have a first magnetic member M1 provided at a location corresponding to the second magnetic member M2. When the engaging portion 45 is fitted in the notch 212, the extension object 41 could remain connected to the frame 211 more firmly due to the mutual attraction between the first magnetic member M1 and the second magnetic member M2.

As shown in FIG. 2 and FIG. 7, in the embodiments of the present invention, the power supply device 23 could further include a first display unit 233. In the current embodiment, the first display unit 233 is presented as being provided on the first seat 215 or the integrally formed housing 21, and the first display unit 233 is coupled to the first remaining power detection circuit 2321 of the first charging module 232. The first display unit 233 could be a LED or a digital display, so that the first display unit 233 could be used to display the output signals of the first remaining power detection circuit 2321, whereby a user could easily check the current remaining power of the first rechargeable battery 231, or check the charging progress of the rechargeable battery 231 during the charging procedure.

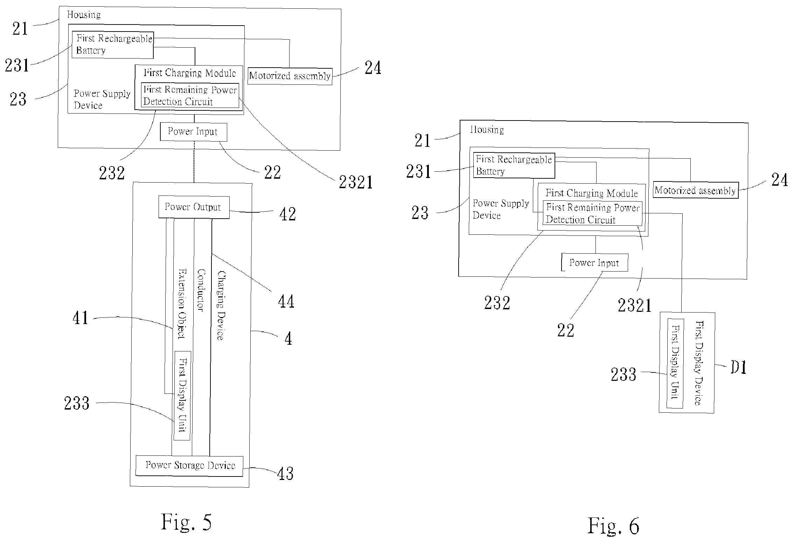

As shown in FIG. 5, in another embodiment, the first display unit 233 could be provided on the extension object 41 or the power storage device 43. The first display unit 233 is connected to the first remaining power detection circuit 2321 of the first charging module 232, wherein the connection could be established through the coupling between connectors, whereby the output signals of the first remaining power detection circuit 2321 could be transmitted to the first display unit 233. Or, the first display unit 233 can be coupled to the electric power output 42 while the first remaining power detection circuit 2321 is coupled to the electric power input 22, whereby to transmit the output signals of the first remaining power detection circuit 2321 to the electric power input 22, and then to transmit the output signals to the first display unit 233 through the coupling between the electric power input 22 and the electric power output 42. In this way, the current status of remaining power of the first rechargeable battery 231 could be displayed. In the current embodiment, the first display unit 233 and the first remaining power detection circuit 2321 of the first charging module 232 could be wirelessly connected. In other words, the first remaining power detection circuit 2321 is coupled to a transmitter to send out the output signals, and the first display unit 233 is coupled to a receiver to receive the output signals. Then the received output signals could be converted into LED signals or digital display signals to be displayed on the first display unit 233 provided at the extension object 41 or the power storage device 43.

As shown in FIG. 6, in yet another embodiment, the first display unit 233 can be fixed on a first display device D1, and the first display device D1 can be provided at a location other than the frame 211, the housing 21, and the charging device 4, such as being located on a wall, on a remote control, or on another portable device such as a cellphone, so that a user could easily check all kinds of power status of the first rechargeable battery 231. The first display unit 233 could be coupled to or wirelessly connected to the first remaining power detection circuit 2321 of the first charging module 232 to transmit signals, whereby to display the current remaining power of the first rechargeable battery 231.

As shown in FIG. 4, in the embodiments of the present invention, the power storage device 43 could further includes a second display unit 433, wherein the second display unit 433 is coupled to the second remaining power detection circuit 4321 of the second charging module 432, whereby the second display unit 433 could display the detected current remaining power of the power storage device 43. Similar to the first display unit 233, the second display unit 433 could be a LED or a digital display. The second display unit 433 could be provided at the power storage device 43 (as shown in FIG. 4).

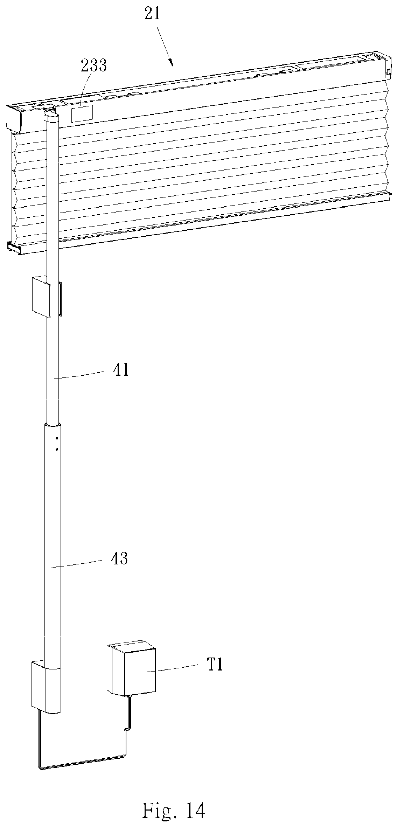

As shown in FIG. 4 and FIG. 14, in the embodiments of the present invention, the power storage device can be charged by provided with electric power from an external power source, wherein the external power source is coupled to the second charging module 432, so as to charge the second rechargeable battery 431 of the power storage device 43. In an embodiment, the external power source can be a direct current power source, which is coupled to the second charging module 432 to charge the second rechargeable battery 431 of the power storage device 43. In another embodiment, the external power source can be a power source created by an AC/DC transformer T1, which could also charge the second rechargeable battery 431 of the power storage device 43.

The components described in above embodiments and exemplified implementations can be respectively selected and combined to carry out the present invention. In the following paragraphs, we are going to describe a practical embodiment. However, this embodiment is illustrated to explain the concept of the present invention, and should not be deemed limitations.

An implementation using the charging system of the first embodiment of the present invention to perform the charging operation is illustrated in FIG. 7 to FIG. 15. The electric window covering 2 at least includes a housing 21, an electric power input 22, a power supply device 23, and a motorized assembly 24. Wherein, the housing 21 includes a frame 211 adapted to accommodate an electric power input 22, a first seat 215 adapted to accommodate a power supply device 23, and a second seat 216 adapted to accommodate a motorized assembly 24. The power supply device 23 is respectively coupled to the electric power input 22 and the motorized assembly 24, wherein the power supply device 23 is used to provide the electric power required by the motorized assembly 24.

A notch 212 and a cover plate 213 are provided at the housing 21, and the frame 211 includes an outer plate 2111 and a first terminal block 2112. The notch 212 has an opening 2121 formed on the outer plate 2111, wherein the notch 212 is recessed into the frame 211 in a direction from the opening 2111 toward an inside of the frame 211. The cover plate 213 is pivotally connected to the outer plate 2111, and is near the opening 2121, so that when the cover plate 213 pivots relative to the outer plate 2111, the opening 2121 could be revealed or covered. The first terminal block 2112 is fixed in the notch 212, which additionally has a first magnetic member M1 provided on an inner bottom surface 2123 of the notch 212. The electric power input 22 is fixed at the first terminal block 2112.

In the current implementation applied with the first embodiment of the present invention, the frame 211, the first seat 215, and the second seat 216 are presented as an integrally formed housing 21, wherein the outer plate 2111 of the frame 211 is an outer plate of the housing 21, and the cover plate 213 is an outer plate pivotally connected to the housing 21. The housing 21 could further include a spring 214, which pushes against an inner top wall 2122 of the notch 212 with an end thereof, and pushes against the inner wall 2131 of the cover plate 213 with another end thereof. With such design, when the cover plate 213 is driven to pivot toward the notch 212, revealing the opening 2121, the spring 214 would be twisted to store energy; when the cover plate 213 is not pivoted by an external force and is in a free condition, the spring 214 would release the stored energy to pivot the cover plate 213, whereby to cover the opening 2121.

As shown in FIG. 1, the power supply device 23 at least includes a first rechargeable battery 231 and a first charging module 232, wherein the first rechargeable battery 231 is respectively coupled to the first charging module 232 and the motorized assembly 24, while the first charging module 232 is coupled to the electric power input 22. In the current implementation, the first rechargeable battery 231 and the first charging module 232 are integrally combined to be conveniently accommodated in the frame 211.

As shown in FIG. 10 to FIG. 15, the charging device 4 at least includes an extension object 41, an electric power output 42, a power storage device 43, a conductor, an engaging portion 45, and a second terminal block 46. The extension object 41 is a hollow tube having stiffness, so that the extension object 41 could erect in a longitudinal direction thereof. The extension object 41 is provided with a first connecting portion 411 and a second connecting portion 412 in the longitudinal direction thereof, and there is a communicated space 413 provided inside the extension object 41 in the longitudinal direction of the extension object 41. The engaging portion 45 is connected to the first connecting portion 411 of the extension object 41, and the engaging portion 45 is substantially perpendicular to the longitudinal direction of the extension object 41. The electric power output 42 is fixedly provided at the second terminal block 46, and the second terminal block 46 is fixed at the engaging portion 45, so that the electric power output 42 is also fixed at the engaging portion 45. The second terminal block 46 is further provided with a second magnetic member M2. When the second terminal block 46 is fixed to the engaging portion 45, the second magnetic member M2 would be located at the bottom surface of the engaging portion 45, and would correspond to the first magnetic member M1 which is fixedly provided at the inner bottom surface 2123 of the notch 212.

As shown in FIG. 13 and FIG. 14, the power storage device 43 at least includes a second rechargeable battery 431 and a second charging module 432 (as shown in FIG. 4), wherein the second rechargeable battery 431 could be coupled to the second charging module 432, and the second charging module 432 could be coupled to a transformer T1. The power source for the transformer T1 is the mains electricity, whereby the mains electricity could be converted into a power source for the charging procedure through the transformer T1. In this way, the electric power could be provided to the second charging module 432, so as to charge the second rechargeable battery 431.

As shown in FIG. 12 and FIG. 13, the conductor which has electrical conductivity is presented as a wire 44a in the current embodiment. The wire 44a is provided in the extension object 41, passing through the communicated space 413, and the wire 44a has a first end 44a1 and a second end 44a2. Wherein, the first end 44a1 of the wire 44a is provided at a location corresponding to the first connecting portion 411 of the extension object 41, and the second end 44a2 is provided at a location corresponding to the second connecting portion 412 of the extension object 41. The first end 44a1 of the wire 44a is coupled to the electric power output 42, and the second end 44a2 is coupled to the second rechargeable battery 431 of the power storage device 43, so that the second rechargeable battery 431 could transmit electric power to the electric power output 42 in the longitudinal direction of the extension object 41 through the electrical conductivity of the wire 44a.

As shown in FIG. 7 to FIG. 15, when a user wants to charge the first rechargeable battery 231 of the power supply device 23 which is provided in the first seat 215, the extension object 41 should be moved toward the frame 211 first. By pushing the cover plate 213 with the engaging portion 45 of the charging device 4, the cover plate 213 would pivot toward the inside of the notch 212, which would reveal the opening 2121 of the notch 212. At the same time, the engaging portion 45 could enter the notch 212 through the opening 2121 to be fitted therein. After that, the charging device 4 could use the engaging portion 45 provided at an end of the extension object 41 to get engaged with the notch 212 of the electric window covering 2, whereby to remain connected to the frame 211 and to hang therefrom. Meanwhile, the second magnetic member M2 located at the bottom surface of the engaging portion 45 and the first magnetic member M1 fixedly provided at the inner bottom surface 2123 of the notch 212 would also stick together, whereby to further ensure the firmness of the connection between the charging device 4 and the frame 211.

In more details, when the engaging portion 45 is fitted in the notch 212, the electric power output 42 fixedly provided at the engaging portion 45 could contact the electric power input 22 fixedly provided at the notch 212, whereby to form an electrical connection. When the second rechargeable battery 431 which is coupled to the second end 44a2 of the wire 44a transmits electric power to the electric power output 42 which is coupled to the first end 44a11 of the wire 44a through the wire 44a, the electric power output 42 could transmit electric power to the first charging module through the electric power input 42 (as shown in FIG. 1), whereby to charge the first rechargeable battery 231 of the power supply device 23.

To finish the charging procedure, the extension object 41 of the charging device 4 should be moved in a direction away from the frame 211, so that the engaging portion 45 could be moved outward through the opening 2121 to get disengaged from the notch 212. At the same time, the second magnetic member M2 of the engaging portion 45 would also leave the first magnetic member M1. Furthermore, the electric power output 42 fixedly provided at the engaging portion 45 would be no longer electrically connected to the electric power input 22 of the notch 212, whereby to stop transmitting electric power to the first charging module. Once the engaging portion 45 is completely disengaged from the notch 212, the cover plate 213 would be driven by the energy, which is stored while the spring 214 is being twisted, and is released from the spring 214 now. In other words, the spring 214 would move the cover plate 213 toward an external of the notch 212 to cover the opening 2121.

The aforementioned electric window covering is provided with the power supply device 23, wherein the power supply device 23 is adapted to provide electric power to the motorized assembly 24 in general conditions, or even provide electric power to a remote control (not shown) which is used to control the operation of the motorized assembly 24. If the power stored in the power supply device 23 decreases or is insufficient, the extension object 41 which has stiffness could be used to move the charging device 4 toward the frame 211, whereby to connect the charging device 4 to the frame 211. By fitting the engaging portion 45 in the notch 212, the charging device 4 could remain connected to the frame 211 and suspended therefrom, and the position of the charging device 4 could be sustained without the need of any supportive external force. At this time, the electric power output 42 of the charging device 4 would contact the electric power input 22 provided in the frame 211, whereby the electric power stored in the power storage device 43 could be transmitted to the electric power output 42 through the wire 44a which is provided in the longitudinal direction of the extension object 41, and could be provided to the electric power input 22 as well. In this way, the electric power could be transmitted to the first charging module of the power supply device 23, so as to charge the first rechargeable battery 231.

With the charging system of the present invention, a user would not need any auxiliary tools, such as a ladder, to reach a high position to charge an electric window covering. Instead, a user could simply stand below the electric window covering 2 as normal, moving the extension object 41 of the charging device 4 toward the frame 211 of the electric window covering 2 with its longitudinal direction pointing up. After the charging device 4 is connected to the frame 211, the charging device 4 could provide electric power to the electric power input 22 provided at the frame 211, wherein the electric power would be transmitted to the power supply device 23 as the power required for the charging procedure. At this time, the charging device 4 would remain connected to the frame 211 even if not held or supported, so that the charging procedure could go on. When the power supply device 23 completes the charging procedure, the user would still only need to stand below the electric window covering 2 as normal, moving the charging device 4 away from the frame 211 and breaking the connection therebetween. In other words, a user could charge the power supply device 23 of the electric window covering 2 without the need to use any auxiliary tools to reach a high position. Furthermore, once the charging is completed, the charging device 4 could be disengaged from the frame 211 by simply being moved, which could also dismiss the downward pulling force exerted on the frame 211 by the charging device 4, whereby to prevent the frame 211 from being deformed by force.

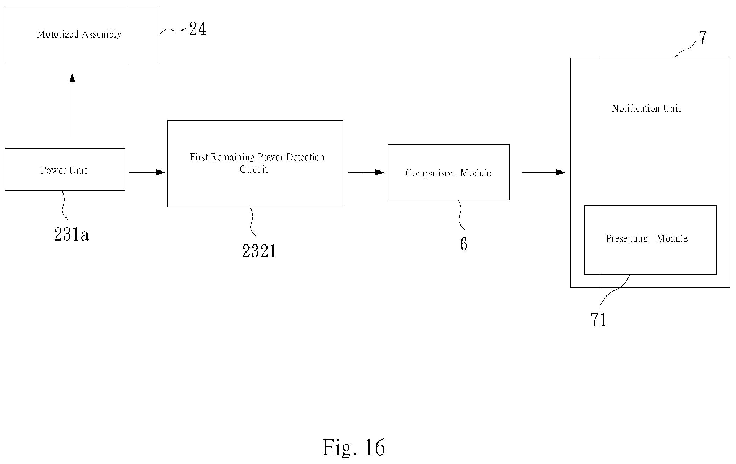

Furthermore, the embodiment of the present invention could also actively remind the user to charge the power unit 231a when the potential magnitude of the power unit 231a lowers to some predetermined value. The system block diagram of such implementation is shown in FIG. 16, wherein the first remaining power detection circuit 2321 is coupled to the power unit 231a to detect the current potential magnitude of the power unit 231a. The first remaining power detection circuit 2321 generates and outputs a potential signal. The charging system could further include a comparison module 6 and a notification unit 7, wherein the notification unit 7 includes a presenting module 71. The comparison module 6 is coupled to the first remaining power detection circuit 2321, while the notification unit 7 is coupled to the comparison module 6. The potential signal outputted by the first remaining power detection circuit 2321 is inputted to the comparison module 6 to be compared with a threshold predetermined in the comparison module 6. When the potential magnitude presented by the potential signal is less than the threshold, the comparison module 6 generates and outputs a warning notice signal, which is then transmitted to the presenting module 71 of the notification unit 7, so that the presenting module 71 could present at least one kind of warning notice which represents the warning notice signal. Whereby, only when the potential magnitude of the power unit 231a which supplies power to the motorized assembly 24 is lowered to be less than the predetermined threshold will the charging system actively send out the warning notice signal, which is subsequently presented by the presenting module 71. By presenting at least one kind of warning notice to inform the user to charge the power unit 231a, it would be convenient for the user to get the information. If the potential magnitude of the power unit 231a is greater than the threshold, it means that the capacity of the power unit 231a is still sufficient for supplying power to and driving the motorized assembly 24, and, in such condition, the comparison module 6 does not output any warning notice signal to the presenting module 71, whereby the power consumption of the power unit 231a could be reduced. As a result, the power unit 231a could hold its potential magnitude higher than the threshold for a longer time.

In the current embodiment, the presenting module 71 includes a visual notification generating component, e.g., a display component, so that the display component could, upon receiving the warning notice signal, be driven to display the warning notice representing the warning notice signal in forms such as text notification, icon notification, or image notification.

In the current embodiment, the presenting module 71 includes an audio notification generating component, e.g., an sound outputting component, including a buzzer, a speaker, or similar components, so that the buzzer or the speaker could, upon receiving the warning notice signal, be driven to make the warning notice representing the warning notice signal in forms such as text-to-speech, siren, or a piece of predetermined music.

In the current embodiment, the presenting module 71 includes a tactile notification generating component, e.g., a vibrating component, so that the vibrating component could, upon receiving the warning notice signal, be driven to make vibrations representing the warning notice signal, whereby to inform the user.

In the current embodiment, the first remaining power detection circuit 2321 could determine the current total potential magnitude of the power unit 231a in ways regarding voltage difference or current level.

In the current embodiment, the threshold for the comparison of the potential magnitude predetermined in the comparison module 6 is 30% of the total potential magnitude of the power unit 231a when it is fully charged. However, the percentage mentioned here is not a limitation of the present invention; the threshold could be adjusted according to the potential magnitude required for driving different motorized assemblies 24.

In the current embodiment, the presenting module 71 is controllable to periodically present the warning notice until the comparison module 6 no longer outputs the warning notice signal.

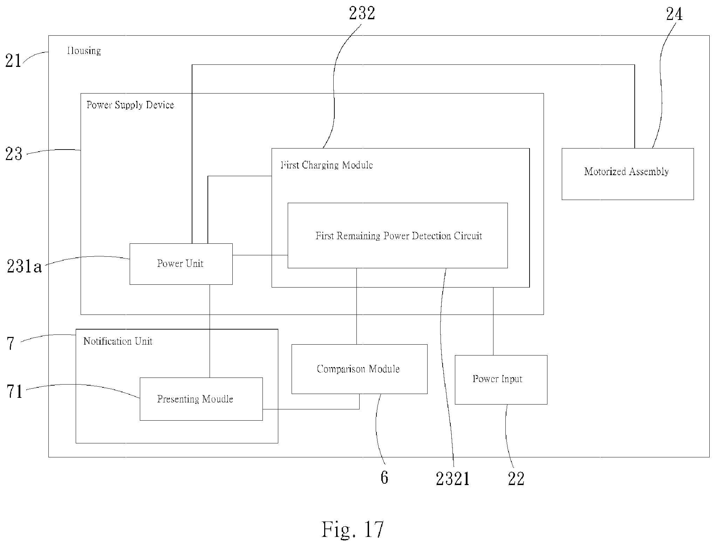

In the embodiment shown in FIG. 17, the comparison module 6 and the presenting module 71 of the notification unit 7 are disposed at the housing 21, and the presenting module 71 is coupled to the power unit 231a, so that the power unit 231a could supply the power required when the presenting module 71 is driven. The first remaining power detection circuit 2321 of the power supply device 23 detects the potential magnitude of the power unit 231a, and accordingly generates and outputs a potential signal to the comparison module 6. When the potential magnitude represented by the potential signal is less than the predetermined threshold, the comparison module 6 generates and outputs a warning notice signal to the presenting module 71. Therefore, the presenting module 71 provided in the housing 21 could present the warning notice representing the warning notice signal, in ways such as emitting light or showing images through a display or an indicator light or making sounds through a buzzer, to notify the user to charge the power unit 231a.

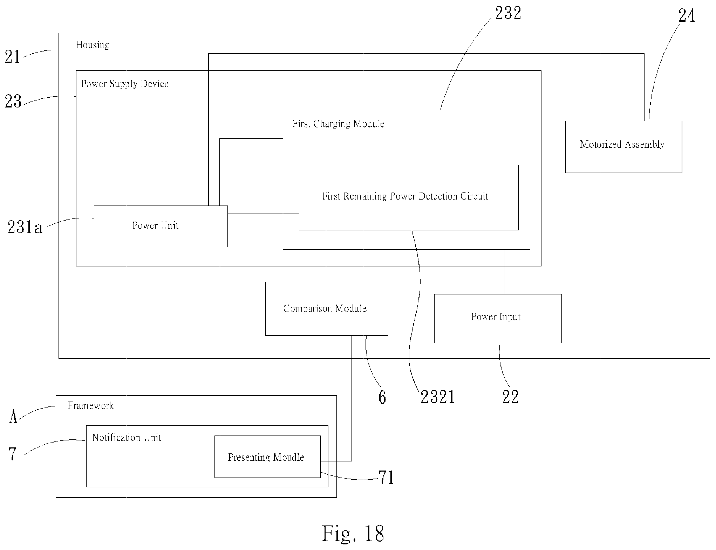

In the embodiment shown in FIG. 18, the presenting module 71 could be also disposed at a framework A, which is independent of the housing 21, if it is more feasible to notify the user.

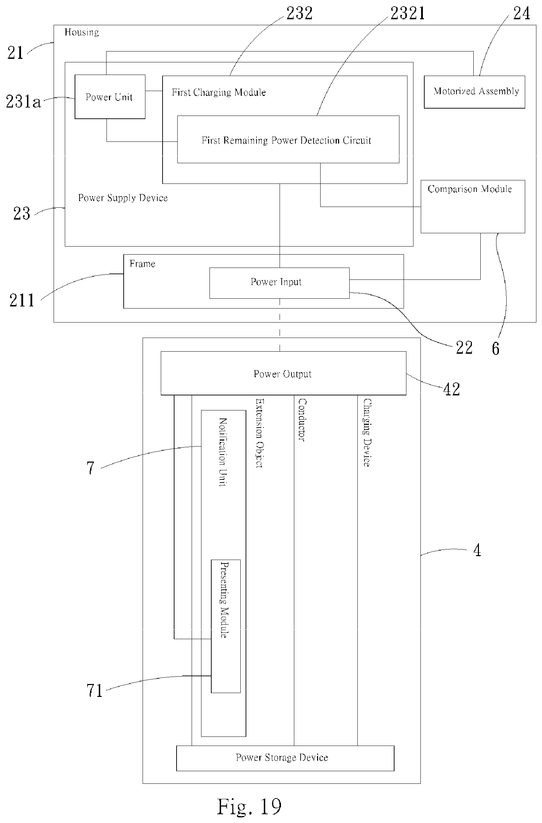

In the embodiment shown in FIG. 19, the notification unit 7 is disposed at the charging device 4, and the charging device 4 is connected to a first fixing structure. The frame 211 of the electric window covering 2 fixes the second fixing structure. When the charging device 4 is connected to the frame 211 of the electric window covering 2 by connecting the first fixing structure and the second fixing structure, the presenting module 71 of the notification unit 7 could present the warning notice. The implementations of the first fixing structure and the second fixing structure are basically described in above paragraphs; the implementation for the current embodiment is described below. The comparison module 6 is disposed in the housing 21, and is coupled to the electric power input 22 disposed on the frame 211. The notification unit 7 is disposed at the charging device 4, and the presenting module 71 of the notification unit 7 is coupled to the electric power output 42 of the charging device 4. When the first fixing structure and the second fixing structure are connected, the warning notice signal outputted by the comparison module 6 could be transmitted to the presenting module 71 through the electric power input 22 and the electric power output 42, by which the presenting module 71 disposed at the charging device 4 could present the warning notice representing the warning notice signal to inform the user to charge the power unit 231a.

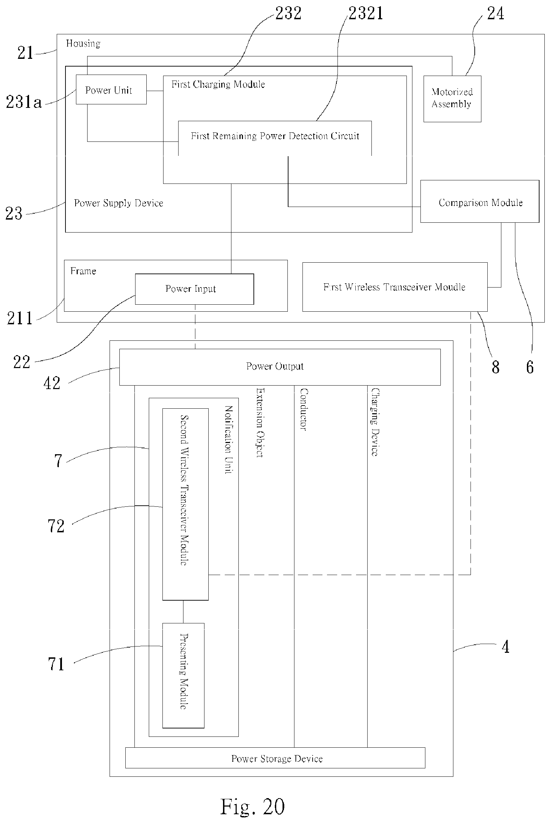

In the embodiment shown in FIG. 20, the comparison module 6 and the notification unit 7 disposed at the charging device 4 could transmit the warning notice signal wirelessly, and the implementation is described below. The comparison module 6 is disposed at the housing 21, and is coupled to a first wireless transceiver module 8; the notification unit 7 disposed on the charging device 4 further includes a second wireless transceiver module 72, which is coupled to the presenting module 71. When the comparison module 6 generates and outputs the warning notice signal, the warning notice signal could be transmitted to the presenting module 71 through the wireless transmission between the first wireless transceiver module 8 and the second wireless transceiver module 72, by which the presenting module 71 could present the warning notice. Said warning notice could be vibrations or indicating lights, but this is not a limitation of the present invention. With the warning notice presented by the presenting module 71 on the charging device 4, the user could learn about the fact that the power unit 231a of the electric window covering needs to be charged.

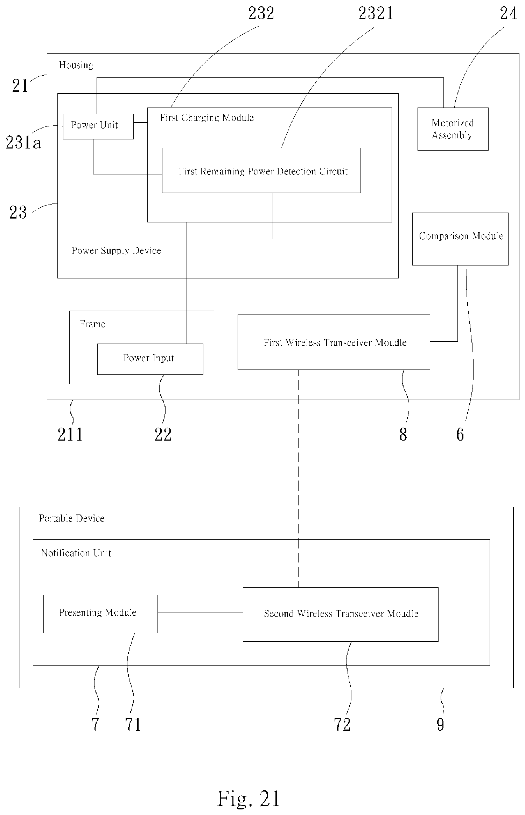

In the embodiment shown in FIG. 21, the notification unit 7 is disposed at a portable device 9, e.g., a cellphone or a portable terminal device. The comparison module 6 is disposed in the housing 21, and is coupled to a first wireless transceiver module 8. The presenting module 71 of the notification unit 7 is coupled to a second wireless transceiver module 72. When the potential magnitude represented by the potential signal received by the comparison module 6 is less than the predetermined threshold, the warning notice signal is generated and outputted. Said warning notice signal could be transmitted to the presenting module 71 through the wireless transmission between the first wireless transceiver module 8 and the second wireless transceiver module 72, by which the presenting module 71 could present the warning notice. In the current embodiment, the presenting module 71 and the second wireless transceiver module 72 could be the presenting module and the wireless transceiver module inherently included in the portable device 9. For example, if the portable device 9 is a cellphone, the presenting module 71 could be the display, the speaker, or the vibrating component of the cellphone, and the warning notice could be text messages, images, sounds, or vibrations, which are not limitations of the present invention. Upon receiving the warning notice, the user gets to know that the power unit 231a currently has low capacity, and therefore could charge the power unit 231a of the electric window covering.

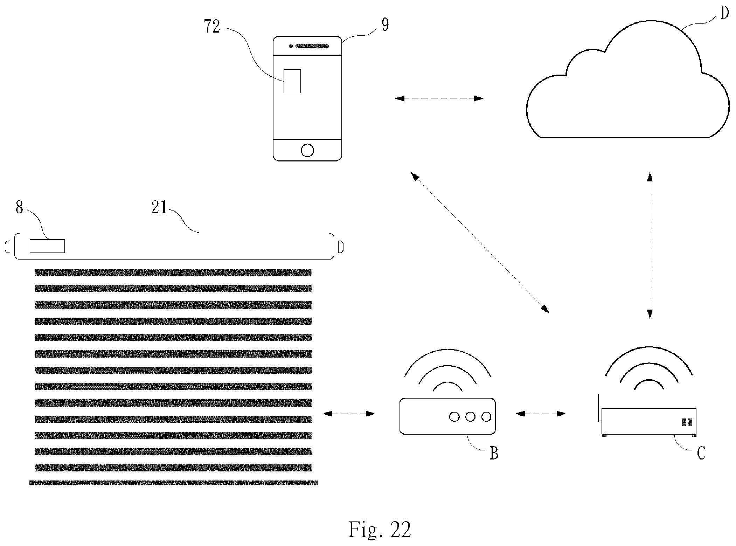

In the embodiments shown in FIG. 21 and FIG. 22, the first wireless transceiver module 8 coupled to the comparison module 6 could perform wireless transmission with the second wireless transceiver module 72 disposed at the portable device 9 through a gateway B and a router C, or through a gateway B, a router C, and a cloud server D.

## Claims

1. An electric window covering (2) comprising:
a motorized assembly (24), which controls a movement of a covering material of the electric window covering (2);
a power supply device (23), which comprises a rechargeable power unit (231a) and a first remaining power detection circuit (2321), wherein the rechargeable power unit (231a) is coupled to and provides power to the motorized assembly (24), and the first remaining power detection circuit (2321) is coupled to the rechargeable power unit (231a) to detect a potential magnitude of the rechargeable power unit (231a) and to generate and output a potential signal;
a comparison module (6) coupled to the first remaining power detection circuit (2321), wherein the potential signal outputted by the first remaining power detection circuit (2321) is inputted into the comparison module (6); when the potential magnitude represented by the potential signal is less than a threshold predetermined in the comparison module (6), the comparison module (6) generates and outputs a warning notice signal; and
a notification unit (7) comprising a presenting module (71), wherein the presenting module (71) receives the warning notice signal and represents a warning notice representing the warning notice signal;
**characterized in that** said electric window covering further comprising:
a portable charging device (4) configured to be detachably coupled to and provide power saved in the portable charging device to the rechargeable power unit (231a), the portable charging device (4) comprising an electric power output (42);
a first fixing structure disposed at the portable charging device (4);
a frame (211);
a second fixing structure disposed at the frame (211); and
an electric power input (22) disposed at the frame (211) and coupled to the rechargeable power unit (231a);
wherein when the first fixing structure and the second fixing structure are connected, the electric power output (42) provides the power to the rechargeable power unit (231a) through the electric power input (22), when the first fixing structure and the second fixing structure are separated, the electric power output (42) stops providing the power to the rechargeable power unit (231a).

2. The electric window covering (2) of claim 1, **characterized in that** the presenting module (71) comprises a visual notification generating component.

3. The electric window covering (2) of claims 1-2, **characterized in that** the presenting module (71) comprises an audio notification generating component.

4. The electric window covering (2) of claims 1-3, **characterized in that** the presenting module (71) comprises a tactile notification generating component.

5. The electric window covering (2) of claims 1-4, further **characterized by** a housing (21), wherein the notification unit (7) is disposed at the housing (21); the comparison module (6) is coupled to the presenting module (71) of the notification unit (7) ; the warning notice signal outputted by the comparison module (6) is transmitted to the presenting module (71) to present the warning notice.

6. The electric window covering (2) of claim 1, **characterized in that** the comparison module (6) is coupled to the electric power input (22), and the notification unit (7) is disposed at the portable charging device (4); the presenting module (71) of the notification unit (7) is coupled to the electric power output (42); when the first fixing structure and the second fixing structure are connected, the warning notice signal outputted by the comparison module (6) is transmitted to the presenting module (71) through the electric power input (22) and the electric power output (42) to present the warning notice.

7. The electric window covering (2) of claims 1-4,further **characterized by** a first wireless transceiver module (8), which is coupled to the comparison module (6), and receives the warning notice signal outputted by the comparison module (6), wherein the notification unit (7) comprises a second wireless transceiver module (72), which is coupled to the presenting module (71); the warning notice signal is transmitted to the presenting module (71) through the first wireless transceiver module (8) and the second wireless transceiver module (72), whereby the presenting module (71) presents the warning notice accordingly.

8. The electric window covering (2) of claim 7, **characterized in that** the notification unit (7) is disposed at the portable charging device (4).

9. The electric window covering (2) of claims 1-7, **characterized in that** the notification unit (7) is disposed at a portable device (9).

10. The electric window covering (2) of claims 1-9, **characterized in that** the presenting module (71) is driven to present the warning notice periodically.

## Patentansprüche

1. Elektrische Fensterabdeckung (2), welche umfasst:
eine motorisierte Anordnung (24), die eine Bewegung eines Abdeckmaterials der elektrischen Fensterabdeckung (2) steuert;
eine Leistungsversorgungsvorrichtung (23), die eine wiederaufladbare Leistungseinheit (231a) und eine erste Restleistungserfassungsschaltung (2321) umfasst, worin die wiederaufladbare Leistungseinheit (231a) mit der motorisierten Anordnung (24) gekoppelt ist und diese mit Leistung versorgt, und die erste Restleistungserfassungsschaltung (2321) mit der wiederaufladbaren Leistungseinheit (231a) gekoppelt ist, um eine Potentialgröße der wiederaufladbaren Leistungseinheit (231a) zu erfassen und ein Potentialsignal zu erzeugen und auszugeben;
ein Vergleichsmodul (6), das mit der ersten Restleistungserfassungsschaltung (2321) gekoppelt ist, wobei das von der ersten Restleistungserfassungsschaltung (2321) ausgegebene Potentialsignal in das Vergleichsmodul (6) eingegeben wird; und wenn die durch das Potentialsignal dargestellte Potentialgröße kleiner als ein in dem Vergleichsmodul (6) vorbestimmter Schwellenwert ist, das Vergleichsmodul (6) ein Warnhinweis-Signal erzeugt und dieses ausgibt; und
eine Benachrichtigungseinheit (7), die ein Anzeigemodul (71) umfasst, wobei das Anzeigemodul (71) das Warnhinweis-Signal empfängt und einen Warnhinweis darstellt, der das Warnhinweis-Signal repräsentiert;
**dadurch gekennzeichnet, dass** die elektrische Fensterabdeckung ferner umfasst:
eine tragbare Ladevorrichtung (4), die konfiguriert ist, abnehmbar mit der wiederaufladbaren Leistungseinheit (231a) gekoppelt zu sein und diese mit der in der tragbaren Ladevorrichtung gespeicherten Leistung zu versorgen, worin die tragbare Ladevorrichtung (4) einen elektrischen Leistungsausgang (42) umfasst;
eine erste Befestigungsstruktur, die an der tragbaren Ladevorrichtung (4) angeordnet ist;
einen Rahmen (211);
eine zweite Befestigungsstruktur, die an dem Rahmen (211) angeordnet ist; und
einen elektrischen Leistungseingang (22), der an dem Rahmen (211) angeordnet und mit der wiederaufladbaren Leistungseinheit (231a) gekoppelt ist;
wobei, wenn die erste Befestigungsstruktur und die zweite Befestigungsstruktur verbunden sind, der elektrische Leistungsausgang (42) die Leistung an die wiederaufladbare Leistungseinheit (231a) durch den elektrischen Leistungseingang (22) liefert, und wenn die erste Befestigungsstruktur und die zweite Befestigungsstruktur getrennt werden, der elektrische Leistungsausgang (42) aufhört, die Leistung an die wiederaufladbare Leistungseinheit (231a) zu liefern.

2. Elektrische Fensterabdeckung (2) nach Anspruch 1, **dadurch gekennzeichnet, dass** das Anzeigemodul (71) eine Komponente zur Erzeugung einer visuellen Benachrichtigung umfasst.

3. Elektrische Fensterabdeckung (2) nach einem der Ansprüche 1-2, **dadurch gekennzeichnet, dass** das Anzeigemodul (71) eine Komponente zur Erzeugung einer akustischen Benachrichtigung umfasst.

4. Elektrische Fensterabdeckung (2) nach einem der Ansprüche 1-3, **dadurch gekennzeichnet, dass** das Anzeigemodul (71) eine Komponente zur Erzeugung einer taktilen Benachrichtigung umfasst.

5. Elektrische Fensterabdeckung (2) nach einem der Ansprüche 1-4, ferner **gekennzeichnet durch** ein Gehäuse (21), worin die Benachrichtigungseinheit (7) an dem Gehäuse (21) angeordnet ist; das Vergleichsmodul (6) mit dem Anzeigemodul (71) der Benachrichtigungseinheit (7) gekoppelt ist; und wobei das von dem Vergleichsmodul (6) ausgegebene Warnhinweis-Signal an das Anzeigemodul (71) übertragen wird, um den Warnhinweis anzuzeigen.

6. Elektrische Fensterabdeckung (2) nach Anspruch 1, **dadurch gekennzeichnet, dass** das Vergleichsmodul (6) mit dem elektrischen Leistungseingang (22) gekoppelt ist und die Benachrichtigungseinheit (7) an der tragbaren Ladevorrichtung (4) angeordnet ist; das Anzeigemodul (71) der Benachrichtigungseinheit (7) mit dem elektrischen Leistungsausgang (42) gekoppelt ist; und wobei, wenn die erste Befestigungsstruktur und die zweite Befestigungsstruktur verbunden sind, das von dem Vergleichsmodul (6) ausgegebene Warnhinweis-Signal über den elektrischen Leistungseingang (22) und den elektrischen Leistungsausgang (42) an das Anzeigemodul (71) übertragen wird, um den Warnhinweis zu präsentieren.

7. Elektrische Fensterabdeckung (2) nach einem der Ansprüche 1-4, ferner **gekennzeichnet durch** ein erstes drahtloses Sende-/Empfangsmodul (8), das mit dem Vergleichsmodul (6) gekoppelt ist und welches das von dem Vergleichsmodul (6) ausgegebene Warnhinweis-Signal empfängt, worin die Benachrichtigungseinheit (7) ein zweites drahtloses Sende-/Empfangsmodul (72) umfasst, das mit dem Anzeigemodul (71) gekoppelt ist; wobei das Warnhinweis-Signal über das erste drahtlose Sende-/Empfangsmodul (8) und das zweite drahtlose Sende-/Empfangsmodul (72) an das Anzeigemodul (71) übertragen wird, wodurch das Anzeigemodul (71) den Warnhinweis entsprechend präsentiert.

8. Elektrische Fensterabdeckung (2) nach Anspruch 7, **dadurch gekennzeichnet, dass** die Benachrichtigungseinheit (7) an der tragbaren Ladevorrichtung (4) angeordnet ist.

9. Elektrische Fensterabdeckung (2) nach einem der Ansprüche 1-7, **dadurch gekennzeichnet, dass** die Benachrichtigungseinheit (7) an einem tragbaren Gerät (9) angeordnet ist.

10. Elektrische Fensterabdeckung (2) nach einem der Ansprüche 1-9, **dadurch gekennzeichnet, dass** das Anzeigemodul (71) so angesteuert wird, dass es den Warnhinweis periodisch anzeigt.

## Revendications

1. Couvre-fenêtre électrique (2) comprenant:
un ensemble motorisé (24), qui commande le mouvement d'un matériau de revêtement du couvre-fenêtre électrique (2);
un dispositif d'alimentation électrique (23), qui comprend une unité d'alimentation rechargeable (231a) et un premier circuit de détection de puissance restante (2321), dans lequel l'unité d'alimentation rechargeable (231a) est couplée à l'ensemble motorisé (24) et lui fournit de l'énergie, et le premier circuit de détection de puissance restante (2321) est couplé à l'unité d'alimentation rechargeable (231a) pour détecter une magnitude de potentiel de l'unité d'alimentation rechargeable (231a) et pour générer et émettre un signal de potentiel;
un module de comparaison (6) couplé au premier circuit de détection de puissance restante (2321), dans lequel le signal de potentiel émis par le premier circuit de détection de puissance restante (2321) est entré dans le module de comparaison (6); lorsque la magnitude de potentiel représentée par le signal de potentiel est inférieure à un seuil prédéterminé dans le module de comparaison (6), le module de comparaison (6) génère et émet un signal d'avis d'avertissement; et
une unité de notification (7) comprenant un module de présentation (71), dans lequel le module de présentation (71) reçoit le signal d'avis d'avertissement et représente un avis d'avertissement représentant le signal d'avis d'avertissement;
**caractérisé en ce que** ledit couvre-fenêtre électrique comprend en outre:
un dispositif de charge portable (4) configuré pour être couplé de manière amovible à l'unité d'alimentation rechargeable (231a) et lui fournir de l'énergie sauvegardée dans le dispositif de charge portable, le dispositif de charge portable (4) comprenant une sortie d'énergie électrique (42);
une première structure de fixation disposée sur le dispositif de charge portable (4);
un cadre (211);
une seconde structure de fixation disposée sur le cadre (211); et
une entrée d'énergie électrique (22) disposée sur le cadre (211) et couplée à l'unité d'alimentation rechargeable (231a);
dans lequel, lorsque la première structure de fixation et la seconde structure de fixation sont connectées, la sortie d'énergie électrique (42) fournit l'énergie à l'unité d'alimentation rechargeable (231a) à travers l'entrée d'énergie électrique (22), et lorsque la première structure de fixation et la seconde structure de fixation sont séparées, la sortie d'énergie électrique (42) cesse de fournir l'énergie à l'unité d'alimentation rechargeable (231a).

2. Couvre-fenêtre électrique (2) de la revendication 1, **caractérisé en ce que** le module de présentation (71) comprend un composant de génération de notification visuelle.

3. Couvre-fenêtre électrique (2) des revendications 1-2, **caractérisé en ce que** le module de présentation (71) comprend un composant de génération de notification audio.

4. Couvre-fenêtre électrique (2) des revendications 1-3, **caractérisé en ce que** le module de présentation (71) comprend un composant générant une notification tactile.

5. Couvre-fenêtre électrique (2) des revendications 1-4, **caractérisé en outre par** un boîtier (21), dans lequel l'unité de notification (7) est disposée sur le boîtier (21); le module de comparaison (6) est couplé au module de présentation (71) de l'unité de notification (7); le signal d'avis d'avertissement émis par le module de comparaison (6) est transmis au module de présentation (71) pour présenter l'avis d'avertissement.

6. Couvre-fenêtre électrique (2) de la revendication 1, **caractérisé en ce que** le module de comparaison (6) est couplé à l'entrée d'énergie électrique (22), et l'unité de notification (7) est disposée sur le dispositif de charge portable (4); le module de présentation (71) de l'unité de notification (7) est couplé à la sortie d'énergie électrique (42); et lorsque la première structure de fixation et la seconde structure de fixation sont connectées, le signal d'avis d'avertissement émis par le module de comparaison (6) est transmis au module de présentation (71) par l'intermédiaire de l'entrée d'énergie électrique (22) et de la sortie d'énergie électrique (42) pour présenter l'avis d'avertissement.

7. Couvre-fenêtre électrique (2) des revendications 1-4, **caractérisé en outre par** un premier module émetteur-récepteur sans fil (8), qui est couplé au module de comparaison (6), et reçoit le signal d'avis d'avertissement émis par le module de comparaison (6), dans lequel l'unité de notification (7) comprend un deuxième module émetteur-récepteur sans fil (72), qui est couplé au module de présentation (71); et le signal d'avis d'avertissement est transmis au module de présentation (71) par l'intermédiaire du premier module émetteur-récepteur sans fil (8) et du deuxième module émetteur-récepteur sans fil (72), le module de présentation (71) présentant l'avis d'avertissement en conséquence.

8. Couvre-fenêtre électrique (2) de la revendication 7, **caractérisé en ce que** l'unité de notification (7) est disposée sur le dispositif de charge portable (4).

9. Couvre-fenêtre électrique (2) des revendications 1-7, **caractérisé en ce que** l'unité de notification (7) est disposée sur un dispositif portable (9).

10. Couvre-fenêtre électrique (2) des revendications 1-9, **caractérisé en ce que** le module de présentation (71) est piloté pour présenter périodiquement l'avis d'avertissement.
